(19) Europäisches Patentamt

European Patent Office

Office européen des brevets

(11) **EP 1 675 063 A2**

## (12) EUROPEAN PATENT APPLICATION

(43) Date of publication:
28.06.2006 Bulletin 2006/26

(51) Int Cl.:
*G06T 1/00* (2006.01)          *H04N 5/232* (2006.01)
*H04N 1/60* (2006.01)

(21) Application number: 05257678.2

(22) Date of filing: 14.12.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 27.12.2004 JP 2004377242

(71) Applicant: CANON KABUSHIKI KAISHA
Ohta-ku, Tokyo (JP)

(72) Inventor: Takahashi, Kenji
Tokyo (JP)

(74) Representative: Legg, Cyrus James Grahame et al
ABEL & IMRAY,
20 Red Lion Street
London WC1R 4PQ (GB)

### (54) Image pickup apparatus and control method of the apparatus

(57)    An image pickup apparatus having an imaging unit, an image processing unit for processing image data captured by the imaging unit, and a recording unit for recording the image data output from the image processing unit includes a display unit configured to display the image data in an electronic viewfinder; a first determining unit configured to determine a first color value on the basis of color information included in a predetermined area in the image being displayed in the electronic viewfinder; a second determining unit configured to determine a second color value on the basis of the color information at a timing different from the timing of the first determining unit; and a setting unit configured to set a parameter used in the image processing unit such that the first color value is converted into the second color value.

FIG. 4

EP 1 675 063 A2

**Description**

BACKGROUND OF THE INVENTION

Field of the Invention

The present invention relates to an image pickup apparatus capable of customizing the colors according to user's preference and to a control method of the image pickup apparatus.

Description of the Related Art

Digital cameras have been in widespread use in recent years and an increasing number of users have the chance of using the digital cameras. Accordingly, the needs of the users for the digital cameras have been diversified. One of the needs is color reproducibility. Manufacturers attempt to achieve average color reproduction on which many users have favorable impression. However, since different users have different preferences, it is difficult to realize the color reproducibility with which all the users feel satisfaction.

In order to resolve such a problem, digital cameras capable of customizing parameters including hue, saturation, and value and capable of realizing the color reproduction desired by a user in image capture have been available. However, since it is difficult to present the relationship between a change in the parameters and a change in color to the user, optimal setting requires skilled operation of the user.

A method in which users can easily adjust colors is disclosed in, for example, Japanese Patent Laid-Open Nos. 2004-129226 (Patent Document 1) and 2003-299115 (Patent Document 2). In Patent Document 1, a structure capable of color conversion in which specifying a desired source color in an image and a desired destination color after the conversion in retouching of the image to convert the specified source color into the specified destination color is described. In Patent Document 2, a structure that captures skin tones as source colors to be changed in an image pickup apparatus and calculates a color correction factor on the basis of the captured skin tones and skin-tone reproduction target values stored in a read only memory (ROM) is described.

However, the structure disclosed in Patent Document 1 relates to the retouching and does not provide the color conversion in the image capture in the image pickup apparatus. In addition, the structure is not suitable for the color conversion in a limited user interface, such as the image pickup apparatus, in which the specification of the source color and the destination color by the use of a cursor is required. In the structure disclosed in Patent Document 2, the user selects a desired destination color from multiple destination colors stored in the ROM in advance. Accordingly, the destination colors are limited in number and flexible color conversion cannot be realized. Furthermore, since the destination colors are not presented to the user as images, it is difficult for the user to know how the source colors are converted.

SUMMARY OF THE INVENTION

The present invention is directed to an image pickup apparatus capable of flexibly, clearly, and easily setting a source color and a destination color of color conversion even with a limited user interface and capable of realizing desired color conversion in image capture with an easy operation.

According to an embodiment of the present invention, an image pickup apparatus having an imaging unit, an image processing unit for processing image data captured by the imaging unit, and a recording unit for recording the image data output from the image processing unit includes a display unit configured to display the image data that is captured by the imaging unit and is output from the image processing unit in an electronic viewfinder; a first determining unit configured to determine a first color value on the basis of color information included in a predetermined area in the image being displayed in the electronic viewfinder; a second determining unit configured to determine a second color value on the basis of the color information included in the predetermined area in the image being displayed in the electronic viewfinder at a timing different from the timing of the first determining unit; and a setting unit configured to set a parameter used in the image processing unit such that the first color value is converted into the second color value.

According to another embodiment of the present invention, a control method in an image pickup apparatus that has an imaging unit, an image processing unit for processing image data captured by the imaging unit, and a recording unit for recording the image data output from the image processing unit includes steps of displaying the image data that is captured by the imaging unit and is output from the image processing unit in an electronic viewfinder in a display unit; determining a first color value on the basis of color information included in a predetermined area in the image being displayed in the electronic viewfinder; determining a second color value on the basis of the color information included in the predetermined area in the image being displayed in the electronic viewfinder at a timing different from the timing of the first determining unit; and setting a parameter used in the image processing unit such that the first color value is converted into the second color value.

According to another embodiment of the present invention, a program causes a computer to perform the above control method. According to another embodiment of the present invention, a recording medium stores the computer readable program.

Further features of the present invention will become apparent from the following description of exemplary embodiments with reference to the attached drawings.

BRIEF DESCRIPTION OF THE DRAWINGS

The accompanying drawings, which are incorporated in and constitute a part of the specification, illustrate embodiments of the invention and, together with the description, serve to explain the principles of the invention.

Fig. 1 is a block diagram showing an example of the structure of an image pickup apparatus according to a first embodiment of the present invention.

Fig. 2 is a perspective view of the image pickup apparatus according to the first embodiment of the present invention.

Fig. 3 is a block diagram illustrating the operation of an image processing unit in the image pickup apparatus according to the first embodiment of the present invention.

Fig. 4 is a flowchart showing a process in a color conversion mode according to the first embodiment of the present invention.

Fig. 5 illustrates a color array of a CCD in the image pickup apparatus according to the first embodiment of the present invention.

Fig. 6 is a diagram illustrating data after interpolation of a CCD signal in the image pickup apparatus according to the first embodiment of the present invention.

Fig. 7 illustrates a filter used in generation of a luminance signal according to the first embodiment of the present invention.

Fig. 8 shows an example of an electronic viewfinder in capture of a source color and a destination color according to the first embodiment of the present invention.

Fig. 9 illustrates color conversion with a three-dimensional look-up table, according to the first embodiment of the present invention.

Fig. 10 is a flowchart showing a process in the color conversion mode according to a second embodiment of the present invention.

Fig. 11 is a flowchart showing a process of switching the execution timing of exposure control and the execution timing of white balance control in the color conversion mode, according to a third embodiment of the present invention.

Fig. 12 illustrates a shooting scene.

Fig. 13A illustrates a change in a field angle and an object in the capture of the source color.

Fig. 13B illustrates a change in the field angle and the object in the capture of the destination color.

Fig. 14 is a flowchart showing a process of locking the exposure and the white balance before the capture of the source color.

DESCRIPTION OF THE EMBODIMENTS

Embodiments of the present invention will be described in detail with reference to the accompanying drawings.

First Embodiment

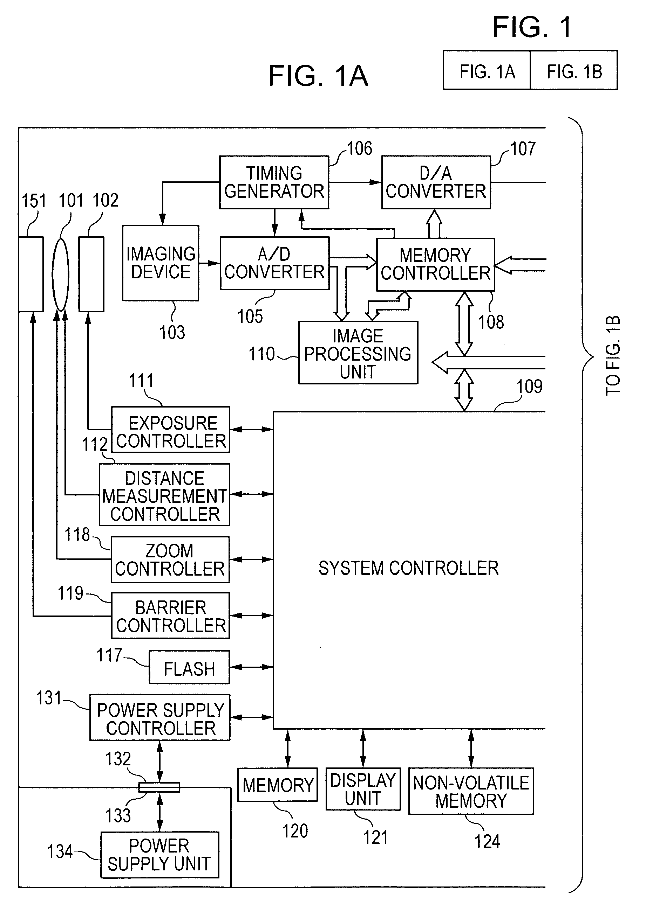

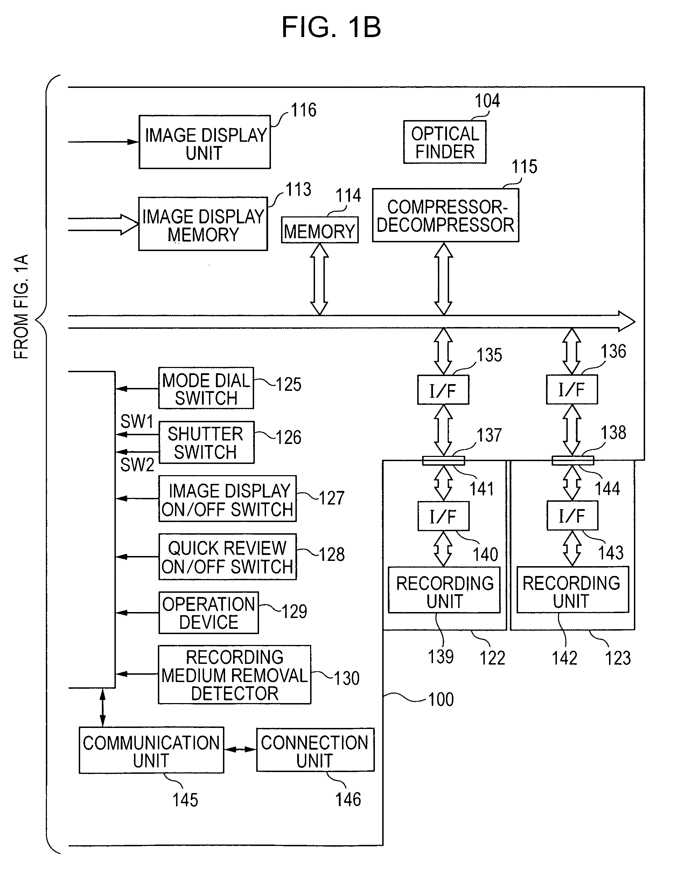

Fig. 1 is a block diagram showing an example of the structure of an image pickup apparatus 100 (a digital camera) according to a first embodiment of the present invention. An image in a physical space is formed on an imaging device 103, which converts an optical image into an electrical signal, through a shooting lens 101 and a shutter 102 having an aperture function. An analog-to-digital (A/D) converter 105 converts the analog signal output from the imaging device 103 into a digital signal. A timing generator 106 is controlled by a memory controller 108 and a system controller 109 and supplies a clock signal and a control signal to the imaging device 103, the A/D converter 105, and a digital-to-analog (D/A) converter 107.

An image processing unit 110 performs predetermined pixel interpolation and color conversion for data supplied from the A/D converter 105 or data supplied from the memory controller 108. The image processing unit 110 also performs predetermined arithmetic processing by using data on the captured image. The system controller 109 controls an exposure controller 111 and a distance measurement controller 112 on the basis of the result of the arithmetic processing in the image processing unit 110 to perform automatic focusing (AF), automatic exposure (AE), and electronic flash (EF) by a Through-The-Lens (TTL) method. The image processing unit 110 further performs the predetermined arithmetic processing by using the data on the captured image to perform automatic white balance (AWB) by the TTL method on the basis of the result of the arithmetic processing.

The memory controller 108 controls the A/D converter 105, the timing generator 106, the D/A converter 107, the image processing unit 110, an image display memory 113, a memory 114, and a compressor-decompressor 115. The data output from the A/D converter 105 is written in the image display memory 113 or the memory 114 through the image processing unit 110 and the memory controller 108 or only through the memory controller 108. In the writing of the data in the image display memory 113, the data is decimated in accordance with the resolution of a display device in the image display unit 116 and the decimated data is written in the image display memory 113. The image data written in the image display memory 113 is converted into an analog signal for image display in the D/A converter 107 and the analog signal is displayed in the image display unit 116. The image display unit 116 is, for example, a thin film transistor-liquid crystal display (TFTLCD). Sequentially displaying the captured image data in the image display unit 116 realizes a function of an electronic viewfinder. The image display unit 116 is capable of arbitrarily turning on/off the display in response to an instruction from the system controller 109. When the display is turned off, the power consumption in the image pickup apparatus 100 is greatly reduced.

The memory 114 stores a still image and a motion picture that are captured. The memory 114 has a storage capacity sufficient to store a predetermined number of still images or a motion picture for a predetermined time period. Accordingly, a lot of images can be written in the memory 114 at high speed even in continuous shooting in which multiple still images are continuously captured or panoramic shooting. The memory 114 also serves as a working area for the system controller 109.

The compressor-decompressor 115 compresses and decompresses image data in, for example, an adaptive discrete cosine transform (ADCT) coding scheme. The compressor-decompressor 115 reads the image stored in the memory 114 to perform the compression or decompression, and writes the compressed or decompressed data in the memory 114.

The exposure controller 111 controls the shutter 102 having an aperture function and has a function of a flash dimmer in cooperation with a flash 117. The distance measurement controller 112 controls focusing of the shooting lens 101. A zoom controller 118 controls zooming of the shooting lens 101. A barrier controller 119 controls the operation of a protection unit 151. The protection unit 151 serves as a barrier that covers an imaging unit including the shooting lens 101, the shutter 102, and the imaging device 103 in the image pickup apparatus 100 to prevent the imaging unit from being contaminated or damaged. The main purpose of the protection unit 151 is to protect the shooting lens 101. The flash 117 has a floodlight function for AF auxiliary light and the function of a flash dimmer. The exposure controller 111 and the distance measurement controller 112 are controlled by the TTL method. Specifically, the system controller 109 controls the exposure controller 111 and the distance measurement controller 112 on the basis of the result of the arithmetic processing in the image processing unit 110 for the image data. The system controller 109 controls the entire image pickup apparatus 100. A memory 120 stores constants, variables, programs, and so on for operating the system controller 109.

A display unit 121 is, for example, a liquid crystal display (LCD) or a light emitting diode (LED) that presents an operation state or a message by using characters or images in accordance with the execution of a program in the system controller 109. The display unit 121 may include a speaker or a piezoelectric buzzer (a sound producing device) capable of producing a sound or a buzzer for presenting part of the operation state or the message. Single or multiple display units 121 may be provided at an easy-to-see position (easy-to-see positions) near an operation unit in the image pickup apparatus 100. Part of the function of the display unit 121 is provided in an optical finder 104.

Among the content displayed in the display unit 121, single shooting/continuous shooting, a self-timer, a compression ratio, the number of recorded pixels, the number of recorded images, the number of recordable images, a shutter speed, an F-number, exposure correction, flash, red-eye reduction, macro photography, a buzzer setting, the remaining amount of the timer battery, the remaining amount of the battery, an error, information by using a multiple-digit numeral, the load/removal state of recording media 122 and 123, the operation of the communication interface (I/F), a date/time, and so on are displayed in the LCD or the like. In-focus, camera shake warning, flash charge, a shutter speed, an F-number, exposure correction, and so on are displayed in the optical finder 104.

A non-volatile memory 124 is an electrically erasable/recordable memory, such as an electronically erasable and programmable read only memory (EEPROM). A mode dial switch 125, a shutter switch 126, an image display ON/OFF switch 127, a quick review ON/OFF switch 128, and an operation device 129 form the operation unit with which the instructions for various operations of the system controller 109 are input. The operation unit includes any or multiple combinations of a switch, a dial, a touch panel, a pointing device by detection of the line of sight, and an audio recognition device. The operation unit will now be described in detail.

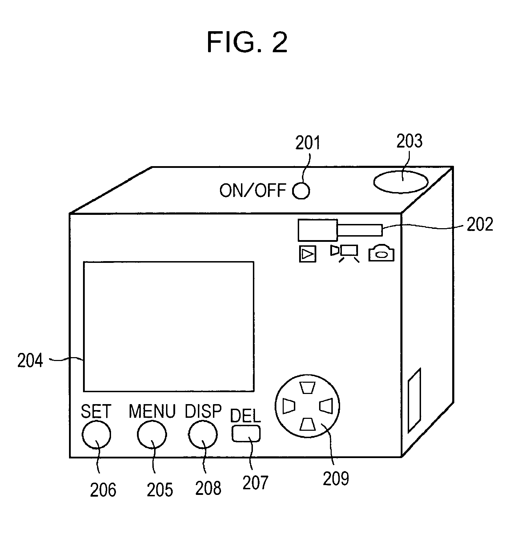

The mode dial switch 125 is used for switching functional modes including a power-off mode, an automatic shooting mode, a shooting mode, a panoramic photography mode, a playback mode, a multiple-screen playback-deletion mode, and a PC connection mode. The shutter switch 126 outputs a signal SW1 during the operation of a shutter button 203 in Fig. 2 (in a state in which the shutter button 203 is half-pressed) and outputs a signal SW2 upon completion of the operation of the shutter button 203 (in a state in which the shutter button 203 is fully pressed). The signal SW1 instructs start of the operations including the AF, the AE, the AWB, and the EF. The signal SW2 instructs start of a series of shooting processes. In the shooting processes, the signal read out from the imaging device 103 is converted into the digital signal in the A/D converter 105 (exposure), the digital signal is written in the memory 114 through the memory controller 108 as image data (RAW data), the exposed signal is subjected to the arithmetic processing in the image processing unit 110 and the memory controller 108 (development) and is written in the memory 114, the image data is read out from the memory 114 and the readout image data is compressed in the compressor-decompressor 115, and the compressed image data is written in the recording medium 122 or 123 (recording).

The image display ON/OFF switch 127 turns on/off the image display unit 116. This function allows the power supply to the image display unit 116, which is, for example, a TFTLCD, to be shut off in the image capture by using the optical finder 104 and, therefore, the power consumption can be saved. The quick review ON/OFF switch 128 turns on/off a quick review function of automatically reproducing the captured image data immediately after the image capture. The quick review ON/OFF switch 128 has a function of setting the quick review function (the captured image can be reviewed even when the image display is turned off) when the image display unit 116 is turned off.

The operation device 129 includes various buttons and a touch panel. Single switch or a combination of multiple switches function as operation instruction buttons. The operation instruction buttons include a menu button, a set button, a macro button, a multi-screen-playback new-page button, a flash setting button, a single shooting/continuous shooting/ self-timer switching button, a menu shift + (plus) button, a menu shift - (minus) button, a playback-image shift + (plus) button, a playback-image shift - (minus) button, a quality-of-captured-image selection button, an exposure control button, a date/time setting button, an image deletion button, and an image-deletion cancel button.

A power supply controller 131 includes a battery detection circuit, a DC-DC converter, a switch circuit for switching a block to be electrified, and so on. The power supply controller 131 detects the presence of the battery, the type of the battery, and the remaining amount of the battery, controls the DC-DC converter on the basis of the detection result and an instruction from the system controller 109, and supplies a required voltage to components including the storage medium for a required period. A power supply unit 134 includes a primary battery, such as an alkaline battery or a lithium battery, a secondary battery, such as a nickel-cadmium battery, a nickel metal hydride battery, or a lithium battery, and an AC adopter. The power supply unit 134 is connected to the power supply controller 131 via connectors 132 and 133.

Interfaces 135 and 136 are used for connecting the recording media 122 and 123, such as a memory card or a hard disk, to a bus in the image pickup apparatus 100. The recording media 122 and 123, such as the memory card or the hard disk, are connected to the interfaces 135 and 136 via connectors 137 and 138, respectively. A recording medium removal detector 130 detects whether the recording medium 122 and/or 123 is connected to the connector 137 and/or 138.

Although two systems of interfaces and connectors to which the recording media are connected are provided in the first embodiment, one system or three or more systems of interfaces and connectors to which the recording media are connected may be provided in the image pickup apparatus 100. Alternatively, a combination (or combinations) of interfaces and connectors, which conform to different standards, may be used in the image pickup apparatus 100. The interfaces and connectors conforming to a standard, for example, a Personal Computer Memory Card International Association (PCMCIA) card or a CompactFlash™ (CF) card, may be used.

When interfaces and connectors conforming a to standard, for example, the PCMCIA card or the Compact-Flash™ (CF) card, are adopted as the interfaces 135 and 136 and the connectors 137 and 138, connecting a communication card, such as including a local area network (LAN) card, a modem card, a universal serial bus (USB) card, an IEEE1394 card, a P1284 card, a small computer system interface (SCSI) card, or a communication card for a personal handyphone system (PHS), to the image pickup apparatus 100 allows the image pickup apparatus 100 to transfer image data and management information associated with the image data to and from another computer or a peripheral device, such as a printer.

Only the optical finder 104 can be used to perform the shooting, without using the electronic viewfinder function of the image display unit 116. As described above, the optical finder 104 has some of the functions of the display unit 121, for example, the functions of displaying the in-focus, the camera shake warning, the flash charge, a shutter speed, an F-number, and the exposure adjustment.

A communication unit 145 has various communication functions including RS232C, USB, IEEE1394, P1284, SCSI, modem, LAN, wireless communication. A connection unit 146 serves as a connector that is connected to the communication unit 145 to connect the image pickup apparatus 100 to another device. The connection unit 146 serves an antenna in the wireless communication.

The recording medium 122 includes a recording medium 139 formed of a semiconductor memory or a magnetic disc, an interfaces 140 with the image pickup apparatus 100, and a connector 141 connecting the recording medium 122 to the image pickup apparatus 100. The recording medium 123 includes a recording medium 142 formed of a semiconductor memory or a magnetic disc, an interfaces 143 with the image pickup apparatus 100, and a connector 144 connecting the recording medium 123 to the image pickup apparatus 100.

Fig. 2 is a perspective view of the image pickup apparatus 100 (digital camera). A power switch 201 is used for turning on/off power. A mode switch lever 202, a MENU button 205, a SET button 206, a delete (DEL) button 207, a display (DISP) button 208, and a cross button 209 form part of the operation device 129 described above. The mode switch lever 202 is used for switching various functional modes including the shooting mode, the playback mode, a motion-picture shooting mode, and a still-image capturing mode. A shutter button 203 serves as the shutter switch 126 described above. An LCD 204, which forms part of the image display unit 116 described above, severs as the electronic viewfinder and displays the reproduced still image and/or the playback motion picture. The MENU button 205 is used for turning on/off a menu screen for changing shooting parameters or the settings of the digital camera. The SET button 206 is used for selecting or determining a menu on the menu screen displayed by operating the MENU button 205. The DEL button 207 specifies deletion of an image. The DISP button 208 forms the image display ON/OFF switch 127 described above and is used for turning on/off the display in the LCD 204. The cross button 209 is used for moving an item on the menu screen. In the playback mode, the left or right buttons of the cross button 209 is pressed to feed the image.

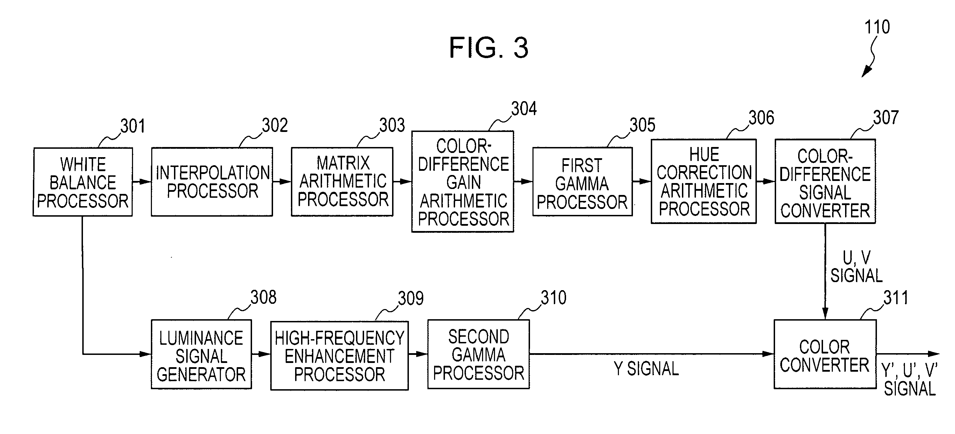

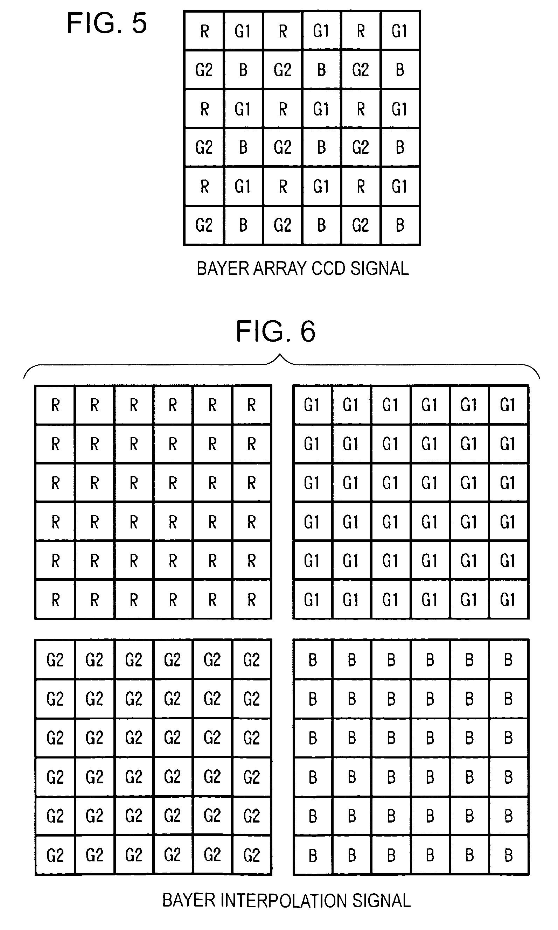

Fig. 3 is a block diagram illustrating the operation of the image processing unit 110 in the image pickup apparatus 100 according to the first embodiment of the present invention. The values of parameters (parameters for matrix operation and parameters for three-dimensional look-up table) used in a process described below are stored in the memory 120 and are appropriately read out by the image processing unit 110. First, a white balance processor 301 performs white balance processing for a charge coupled device (CCD) digital signal converted from an analog signal by the A/D converter 105. Although the white balance processing is not described here, the white balance processing is performed by a method disclosed in, for example, Japanese Patent Laid-Open No. 2003-244723. The CCD digital signal subjected to the white balance processing is supplied to an interpolation processor 302. It is presumed that the imaging device 103 according to the first embodiment has a color filter array called a "Bayer array", as shown in Fig. 5. Accordingly, the interpolation processor 302 converts the data in the Bayer array, shown in Fig. 5, into interpolation data R, G1, G2, and B, as shown in Fig. 6. The interpolated CCD digital signal is supplied to a matrix arithmetic processor 303 and is subjected to 4 x 3 matrix operation shown in Expression (1) to yield Rm, Gm and Bm signal components.

[Formula 1]

$$
\begin{vmatrix} Rm \\ Gm \\ Bm \end{vmatrix} = \begin{vmatrix} M11 & M21 & M31 & M41 \\ M12 & M22 & M32 & M42 \\ M13 & M23 & M33 & M43 \end{vmatrix} \begin{vmatrix} R \\ G1 \\ G2 \\ B \end{vmatrix} \tag{1}
$$

The CCD digital signal subjected to the matrix operation is supplied to a color-difference gain arithmetic processor 304 to apply gains to a color difference signal. Specifically, the Rm, Gm, and Bm signal components are converted into Y, Cr, and Cb signal components on the basis of Expression (2). Gains are applied to the Y, Cr, and Cb signal components on the basis of Expression (3) to yield signal components Cr', and Cb'. The signal components Y, Cr', and Cb' are converted into Rg, Gg, and Bg signal components on the basis of Expression (4) (inverse matrix of Expression (2)).

[Formula 2]

$$\begin{vmatrix} Y \\ Cr \\ Cb \end{vmatrix} = \begin{vmatrix} 0.3 & 0.59 & 0.11 \\ 0.7 & -0.59 & -0.11 \\ -0.3 & -0.59 & 0.89 \end{vmatrix} \begin{vmatrix} Rm \\ Gm \\ Bm \end{vmatrix} \qquad (2)$$

$$Cr' = G1 \times Cr$$

$$Cb' = G1 \times Cb \qquad (3)$$

$$\begin{vmatrix} Rg \\ Gg \\ Bg \end{vmatrix} = \begin{vmatrix} 0.3 & 0.59 & 0.11 \\ 0.7 & -0.59 & -0.11 \\ -0.3 & -0.59 & 0.89 \end{vmatrix}^{-1} \begin{vmatrix} Y \\ Cr' \\ Cb' \end{vmatrix} \qquad (4)$$

The CCD digital signal subjected to the gain operation is supplied to a first gamma processor 305. The first gamma processor 305 performs gamma conversion for the DDC digital signal on the basis of Expressions (5) to (7) to yield signal components Rt, Gt, and Bt. The gamma tables are single-dimension look-up tables here.
[Formula 3]

$$Rt = GammaTable[Rg] \qquad (5)$$

$$Gt = GammaTable[Gg] \qquad (6)$$

$$Bt = GammaTable[Bg] \qquad (7)$$

The CCD digital signal subjected to the gamma conversion is supplied to a hue correction arithmetic processor 306. The hue correction arithmetic processor 306 converts the signal components Rt, Gt, and Bt into signal components Y, Cr, and Cb on the basis of Expression (8), corrects the signal components Cr and Cb on the basis of Expression (9) to yield signal components Cr' and Cb', and converts the signal components Y, Cr', and Cb' into signal components Rh, Gh, and Bh on the basis of Expression (10) (inverse matrix of Expression (8)).
[Formula 4]

$$\begin{vmatrix} Y \\ Cr \\ Cb \end{vmatrix} = \begin{vmatrix} 0.3 & 0.59 & 0.11 \\ 0.7 & -0.59 & -0.11 \\ -0.3 & -0.59 & 0.89 \end{vmatrix} \begin{vmatrix} Rt \\ Gt \\ Bt \end{vmatrix} \quad (8)$$

$$\begin{vmatrix} Cr' \\ Cb' \end{vmatrix} = \begin{vmatrix} H11 & H21 \\ H12 & H22 \end{vmatrix} \begin{vmatrix} Cr \\ Cb \end{vmatrix} \quad (9)$$

$$\begin{vmatrix} Rh \\ Gh \\ Bh \end{vmatrix} = \begin{vmatrix} 0.3 & 0.59 & 0.11 \\ 0.7 & -0.59 & -0.11 \\ -0.3 & -0.59 & 0.89 \end{vmatrix}^{-1} \begin{vmatrix} Y \\ Cr' \\ Cb' \end{vmatrix} \quad (10)$$

The CCD digital signal processed by the hue correction arithmetic processor 306 is supplied to a color-difference signal converter 307. The color-difference signal converter 307 generates U and V signals from the Rh, Gh, and Bh signal components on the basis of Expression (11).
[Formula 5]

$$\begin{vmatrix} U \\ V \end{vmatrix} = \begin{vmatrix} -0.169 & -0.333 & 0.502 \\ 0.499 & -0.421 & -0.078 \end{vmatrix} \begin{vmatrix} Rh \\ Gh \\ Bh \end{vmatrix} \quad (11)$$

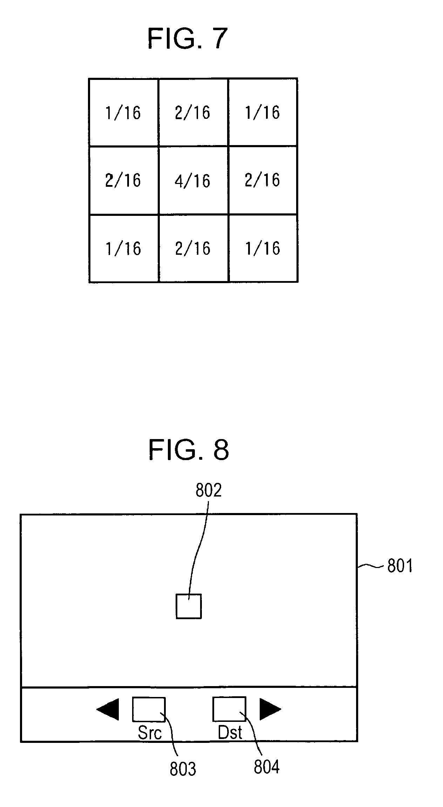

The CCD digital signal subjected to the white balance in the white balance processor 301 is also supplied to a luminance signal generator 308. The luminance signal generator 308 converts the CCD digital signal into a luminance signal. For example, in a primary color filter shown in Fig. 5, all the signal components R and B are set to zero and two-dimensional filtering by using factors shown in Fig. 7 is performed to yield the luminance signal. In contrast, in a complementary color filter, the two-dimensional filtering by using the factors shown in Fig. 7 is performed to yield the luminance signal. The luminance signal generated in the brightness signal generator 308 is subjected to edge enhancement in a high-frequency enhancement processor 309 and is subjected to the gamma conversion in a second gamma processor 310 to generate a Y signal.
The Y signal output from the second gamma processor 310 and the U and V signals output from the color-difference signal converter 307 are converted into Y', U', and V' signals in a color converter 311. Conversion by the use of a three-dimensional look-up table performed in the color converter 311 will be described in detail below.
The digital camera (the image pickup apparatus 100) according to the first embodiment of the present invention has a shooting mode (hereinafter referred to as a color conversion mode) in which an arbitrary color specified by a user can be converted into another arbitrary color specified by the user. In this color conversion mode, an electronic viewfinder (EVF) screen 801 shown in Fig. 8 is displayed in the LCD 204 and a predetermined operation is performed such that a desired color is displayed in a color capture frame 802 in a captured image displayed in real time to determine the color of the image in the color capture frame 802 as a source color or a destination color. After the source color and the destination color are determined, the look-up table in the color converter 311 is set such that the determined source color is converted into the destination color. As a result, in the image subsequently displayed on the EVF screen 801 and the image subsequently captured by operating the shutter button 203, the source color is converted into the destination color. The color conversion mode according to the first embodiment of the present invention will be described in detail.

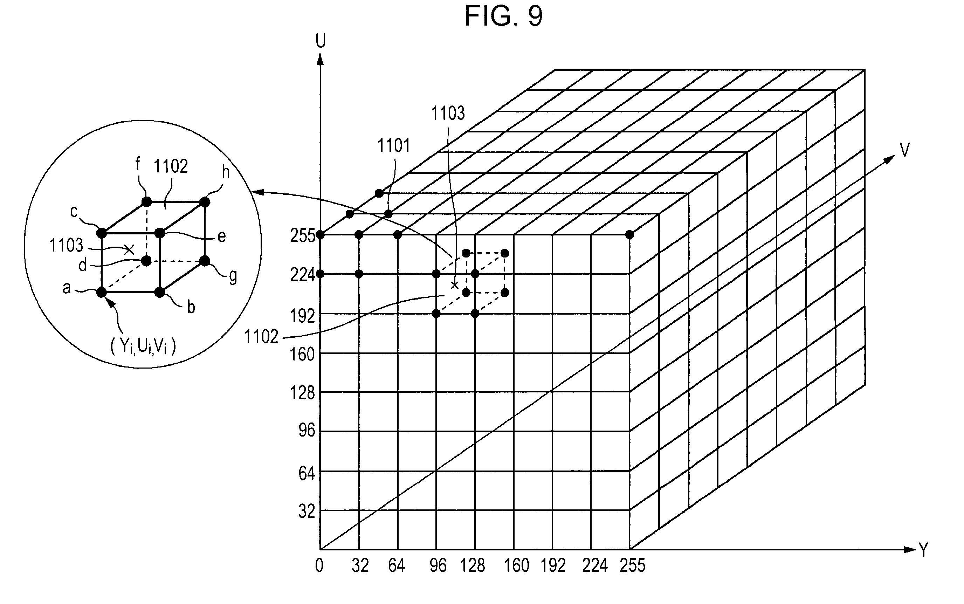

Color conversion from the source color into the destination color in the color conversion mode will now be described. The color converter 311 converts the Y, U, and V signals into the Y', U', and V' signals with reference to the three-dimensional look-up table. According to the first embodiment, in order to reduce the capacity of the three-dimensional look-up table, a list (look-up table) of the Y, U, and V values of 729 (9x9x9) three-dimensional representative grid points given by dividing the ranges from the minimum values to the maximum values of the Y, U, and V signals by eight is provided, and the Y, U, and V signals of the grid points other than the representative grid points are yielded by the interpolation. Fig. 9 is a diagram conceptually showing the three-dimensional look-up table according to the first embodiment. Each grid point has the Y, U, V values after the conversion. For example, a grid point "1101" has values (32, 255, 32) and, if no change occurs between before and after the conversion, the values (32, 255, 32) are allocated to the grid point "1101". If the grid point "1101" is shifted to a grid point (32, 230, 28) after the conversion, the values (32, 230, 28) are allocated to the grid point "1101".

For example, the Y, U, and V values of a point 1103 in a cubic lattice 1102 in Fig. 9 are yielded by the interpolation by using the Y, U, and V values of grid points (a to h) corresponding to the apices of the cubic lattice 1102. The interpolation is performed on the basis of Expressions (12) to (14). It is presumed in Expressions (12) to (14) that input Y, U, and V signals have values Y, U, and V and the corresponding output Y, U, and V signals have values Yout(Y, U, V), Uout (Y, U, V), and Vout (Y, U, V). It is also presumed that a representative gird point (a grid point a in Fig. 9) having values that are smaller than and are closest to the Y, U, and V values of the input Y, U, and V signals has values Yi, Ui and Vi. It is furthermore presumed that a representative-grid-point output signal has values Yout (Yi, Ui, Vi), Uout (Yi, Ui, Vi), and Vout (Yi, Ui, Vi) and the representative grid points have a step width "step" ("32" in the first embodiment). Hence, for example, the signal of a grid point b has values Yi+step, Ui, Vi, and the signal of a grid point c has values Yi, Ui+step, Vi.

[Formula 6]

$$Y = Yi + Yf$$

$$U = Ui + Uf$$

$$V = Vi + Vf$$

```
Yout(Y, U, V) = Yout(Yi + Yf, Ui + Uf, Vi + Vf) =

(Yout(Yi, Ui, Vi)×(Step-Yf)×(Step-Uf)×(Step - Vf)

  + Yout(Yi + Step, Ui, Vi)×(Yf)×(Step - Uf)×(Step - Vf)

  + Yout(Yi, Ui + Step, Vi)×(Step - Yf)×(Uf)×(Step - Vf)

  + Yout(Yi, Ui, Vi + Step)×(Step - Yf)×(Step - Uf)×(Vf)

  + Yout(Yi + Step, Ui + Step, Vi)×(Yf)×(Uf)×(Step - Vf)

  + Yout(Yi + Step, Ui, Vi + Step)×(Yf)×(Step - Uf)×(Vf)

  + Yout(Yi, Ui + Step, Vi + Step)×(Step - Yf)×(Uf)×(Vf)

  + Yout(Yi + Step, Ui + Step, Vi +

Step)×(Yf)×(Uf)×(Vf))/(Step×Step×Step)
                    (12)


Uout(Y, U, V) = Uout(Yi + Yf, Ui + Uf, Vi + Vf) =


(Uout (Yi, Ui, Vi)×(Step - Yf)×(Step - Uf)×(Step - Vf)

  + Uout (Yi + Step, Ui, Vi)×(Yf)×(Step - Uf)×(Step - Vf)

  + Uout(Yi, Ui + Step, Vi)×(Step - Yf)×(Uf)×(Step - Vf)

  + Uout(Yi, Ui, V i + Step)×(Step - Yf)×(Step - Uf)×(Vf)

  + Uout(Yi + Step, Ui + Step, Vi)×(Yf)×(Uf)×(Step - Vf)

  + Uout(Yi + Step, Ui, Vi + Step)×(Yf)×(Step - Uf)×(Vf)

  + Uout(Yi, Ui + Step, Vi + Step)×(Step - Yf)×(Uf)×(Vf)

  + Uout(Yi + Step, Ui + Step, Vi +

Step)×(Yf)×(Uf)×(Vf))/(Step×Step×Step)
                    (13)
```

```
Vout(Y, U, V) = Vout(Yi + Yf, Ui + Uf, Vi + Vf) =

(Vout(Yi, Ui, Vi)×(Step - Yf)×(Step - Uf)×(Step - Vf)

   + Vout(Yi + Step, Ui, Vi)×(Yf)×(Step - Uf)×(Step - Vf)

   + Vout(Yi, Ui + Step, Vi)×(Step - Yf)×(Uf)×(Step - Vf)

   + Vout(Yi, Ui, Vi + Step)×(Step - Yf)×(Step - Uf)×(Vf)

   + Vout(Yi + Step, Ui + Step, Vi)×(Yf)×(Uf)×(Step - Vf)

   + Vout(Yi + Step, Ui, Vi + Step)×(Yf)×(Step - Uf)×(Vf)

   + Vout(Yi, Ui + Step, Vi + Step)×(Step - Yf)×(Uf)×(Vf)

   + Vout(Yi + Step, Ui + Step, Vi +

Step)×(Yf)×(Uf)×(Vf))/(Step×Step×Step)

                    (14)
```

The look-up table conversion and interpolation arithmetic expressions shown in Expressions (12), (13), and (14) are simply expressed as Expression (15) described below. However, in Expression (15), Y, U, and V denote the values of input signals, LUT denotes a look-up table 9x9x9, as shown in Fig. 9, and Yout, Uout and Vout denote the arithmetic results of the look-up table conversion and interpolation (the signals Y', U', and V' in Fig. 3). In other words, the color converter 311 performs the conversion shown in Expression (15).
```
[Formula 7]

      (Yout, Uout, Vout) = LUT [(Y, U, V)]                (15)
```


As described above, after the source color and the destination color are determined in the color conversion mode, the cubic lattice including the source color is determined and the values of the grid points forming the cubic lattice are changed such that the coordinate positions of the source color have the destination color. For example, if the Y, U, and V values of the point 1103 have the source color determined in Fig. 9, the values of the grid points a to h of the cubic lattice 1102 are changed in the interpolation on the basis of Expression (15) such that the Y, U, and V values at the point 1103 become the Y, U, and V values of the set destination color. Although a detailed description is omitted herein, the values of the representative grid points after the change can be mathematically yielded. The color converter 311 uses the three-dimensional look-up table after the change to perform the color conversion. The change in the values of the grid points is referred to as "setting of parameters" in the following description.
Since data on the grid points in the three-dimensional look-up table is determined on the basis of the specified source color and destination color to perform the color conversion, it is easy to set a color according to user's preference for an image to be played back. In addition, the values of only the representative grid points near the color to be changed are changed in the three-dimensional look-up table in the above color conversion. Hence, it is possible to easily convert not all the colors in the image but only some of the colors in the image into a color according to the user's preference at high speed. In other words, the parameters used in the matrix arithmetic processor 303, the color-difference gain arithmetic processor 304, the first gamma processor 305, the hue correction arithmetic processor 306, and others are not changed and only desired colors (a color range) can be changed.

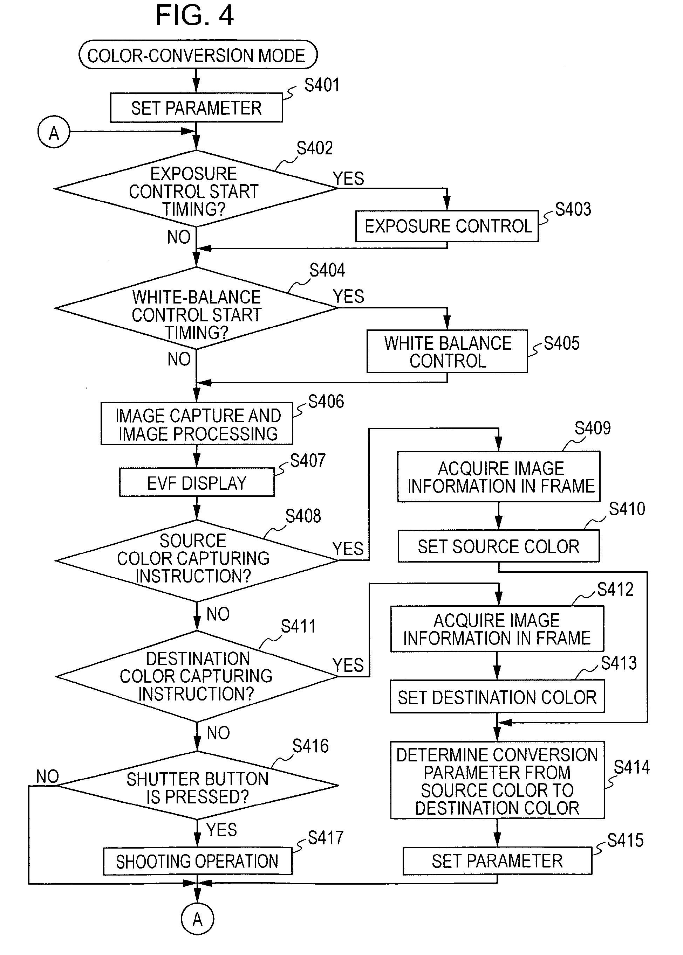

Fig. 4 is a flowchart showing a process in the digital camera, according to the first embodiment of the present invention, in the shooting in the color conversion mode. Since a normal shooting mode other than the color conversion mode has no difference from those in general digital cameras, only the color conversion mode will be described herein.
After a user sets the shooting mode of the digital camera to the color conversion mode, in Step S401, the process sets the parameters set in the previous color conversion mode as parameters used in the color converter 311. The previous parameters are set in Step S401 because it is likely that a user always uses the color conversion mode to convert a color A into a color B (for example, to convert one color of sky into another color of sky). In such a case, it is preferable that the previous source color and destination color be displayed in a source-color display frame 803 and a destination-color display frame 804, respectively, in Fig. 8. In Step S402, the system controller 109 determines whether it is time to start exposure control. If the system controller 109 determines that it is time to start the exposure control, then in Step S403, the exposure controller 111 performs the exposure control. The exposure settings for display in the EVF are determined in this exposure control. Since frequently performing the exposure control causes flicker in the display, the execution interval of the exposure control is set by using a time constant. For example, the exposure control is set to be performed every two seconds. The determination in Step S402 is affirmative at this time period and the exposure control is performed in Step S403.

In Step S404, the system controller 109 determines whether it is time to start white balance control. If the system controller 109 determines that it is time to start the white balance control, then in Step S405, the system controller 109 performs the white balance control. Since frequently performing the white balance control causes flicker in the display, as in the exposure control, the time constant is set, for example, such that the white balance control is performed every five seconds. In the white balance control, white balance coefficients for the white balance are calculated to update the white balance coefficients used in the image processing unit 110.

In Step S406, an image is captured by using an F-number set in the exposure control in Step S403, and the image processing unit 110 performs image processing by using the white balance coefficients set in Step S405 for a through image, which is a real-time output from the imaging device 103. The exposure control in Step S403 and the white balance control in Step S405 are performed as optimization control before the source color and the destination color are determined. In Step S407, the process displays the image data subjected to the image processing in Step S406 in the LCD 204 (the image display unit 116 in Fig. 1) serving as the EVF.

The EVF screen 801 in Fig. 8 is displayed in the LCD 204. As shown in Fig. 8, in the color conversion mode, the EVF screen 801, the color capture frame 802 in the EVF screen 801, the source-color display frame 803, and the destination-color display frame 804 are displayed in the LCD 204. In this LCD 204, the source color and the destination color are set by a predetermined operation with the operation device 129 (Steps 408 to S413) and an image is shot by operating the shutter button 203 (Steps S416 and S417).

A method of setting the source color and the destination color will now be described. In order to specify the source color, the user sets the orientation of the digital camera and operates an optical zoom to set a field angle such that the color capture frame 802 is fully filled with a desired color. In Step S408, the process determines whether an instruction to capture the source color is input. When the left button of the cross button 209 is pressed, the process determines that the instruction to capture the source color is input and proceeds from Step S408 to S409. If the process determines in Step S408 that the instruction to capture the source color is not input, the source color previously captured or a color set by default is used as the current source color. In Step S409, the process acquires pixel data concerning the image currently displayed in the color capture frame 802. In Step S410, the process calculates an average value of the pixel values and determines the calculated average value as the source color. After the source color is determined, a patch representing the source color is displayed in the source-color display frame 803.

Similarly, in order to specify the destination color, the user sets the orientation of the digital camera and operates an optical zoom to set a field angle such that the color capture frame 802 is fully filled with a desired color, and presses the right button of the cross button 209. In Step S411, the process determines whether an instruction to capture the destination color is input. When the right button of the cross button 209 is pressed, the process determines that the instruction to capture the destination color is input and proceeds from Step S411 to S412. If the process determines in Step S411 that the instruction to capture the destination color is not input, the destination color previously captured or a color set by default is used as the current destination color. In Step S412, the process acquires pixel data concerning the image currently displayed in the color capture frame 802. In Step S413, the process calculates an average value of the pixel values and determines the calculated average value as the destination color. After the destination color is determined, a patch representing the destination color is displayed in the destination-color display frame 804.

Although the average value of the pixel values in the color capture frame 802 is calculated in Steps S410 and S413, the pixel data used in the calculation may be the image data that is decimated for display in the EVF (the image data stored in the image display memory 113) or may be the image data stored in the memory 114.

After the source color or the destination color is determined in Step S410 or in Step S413, the process proceeds to Step S414. In Step S414, the process determines conversion parameters used in the conversion from the source color into the destination color. As described above with reference to Fig. 9 and the like, according to the first embodiment, changed values of the grid points forming the cubic lattice including the source color in the three-dimensional look-up table are determined. In Step S415, the process updates the three-dimensional look-up table in the color converter 311. In the subsequent image processing in the image processing unit 110 for displaying the image in the EVF (Steps S406 and S407) or for shooting the image (Steps S416 and S417), the three-dimensional look-up table updated in the color converter 311 is used. As described above, in the shooting of the image, the signal SW1 is generated with the shutter button 203 being half-pressed to perform the AF, the AE, the AWB, and the EF, and the signal SW1 is generated with the shutter button 203 being fully pressed to perform the series of shooting processes.

Although only one pair of the source color and the destination color is set in the first embodiment, the present invention is not limited to this example. Multiple combinations of the source color and the destination color may be set. When the multiple combinations of the source color and the destination color are set, for example, the representative grid points of the cubic lattice including the source color are changed for every source color. If a plurality of source colors is included in one cubic lattice, vectors of the multiple source colors are calculated and an average value of the vectors is used.

Although the left and right buttons of the cross button 209 are used in the capture of the source color and the destination color in the first embodiment, the present invention is not limited to this example. Other operational buttons may be used or dedicated buttons may be provided.

Although the color capture frame is fixed at a position near the center of the EVF screen in the capture of the source color and the destination color in the first embodiment, the color capture frame may be shifted to an arbitrary position in the EVF screen, specified by the user. Alternatively, the size of the color capture frame may be changed in accordance with a user's specification.

Although the three-dimensional look-up table and the interpolation are used in the arithmetic processing in the color converter 311 in the first embodiment, the present invention is not limited to this example. Any processing capable of converting the source color into the destination color, for example, a matrix operation in which the coefficients of the matrix operation are changed for every color space, may be used.

Processing using the matrix operation will now be briefly described. The values of the Y, U, and V signals after the conversion are set on each grid point in Fig. 9 in the first embodiment. In contrast, in the processing using the matrix operation, coefficients M11 to M33 in Expression (16) described below are stored on each grid point. The coefficients M11 to M33 may be determined in accordance with the values Yin, Uin, and Vin and the operation in Expression in (15) may be performed to yield values Yout, Uout, and Vout. However, the coefficients M11 to M33 may be yielded from the coefficients stored in a grid point nearest to the grid point having the values Yin, Uin, and Vin or from the interpolation in each grid point as in the first embodiment.

[Formula 8]

$$
\begin{vmatrix} Yout \\ Uout \\ Vout \end{vmatrix} = \begin{vmatrix} M11 & M12 & M13 \\ M21 & M22 & M23 \\ M31 & M32 & M33 \end{vmatrix} \begin{vmatrix} Yin \\ Uin \\ Vin \end{vmatrix}
$$

(16)

Second Embodiment

According to the first embodiment, the exposure control and the white balance control are performed at time intervals determined in accordance with the respective predetermined time constants (Steps S402 to S405 in Fig. 4). In contrast, according to a second embodiment of the present invention, white balance control and exposure control, which are different from those in the normal shooting, are performed as the optimization control before the acquisition of image information for determining the source color and the destination color (Steps S409 and S412 in Fig. 4) in order to set more appropriate exposure and white balance in the capture of the source color and the destination color and to capture more accurate source color and destination color.

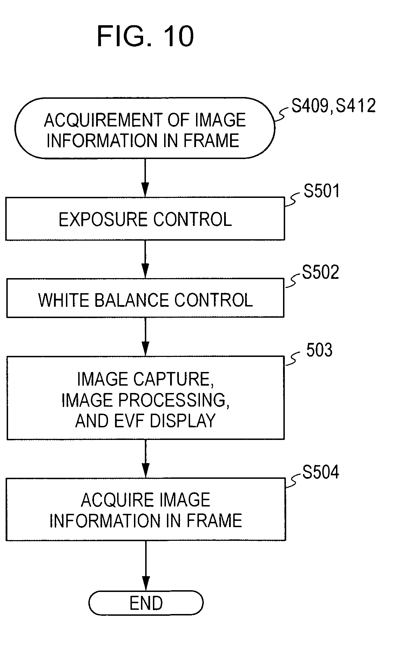

Differences between the first embodiment and the second embodiment will be described. According to the second embodiment, the exposure control and the white balance control are performed in the acquisition of image information in Steps S409 and Step S412 in the first embodiment. Fig. 10 is a flowchart showing a process of acquiring image information in the color capture frame 802 according to the second embodiment. The process in Fig. 10 is replaced with Steps S409 and S412 in Fig. 4. The process according to the second embodiment will be described with reference to Fig. 10.

When the left button of the cross button 209 is pressed, the process determines that an instruction to capture the source color is input and proceeds from Step S408 to S409. In Step S409, Steps S501 to S504 in Fig. 10 are performed.

In Step S501, the process performs the exposure control as in Step S403 in Fig. 4. In Step S502, the process performs the white balance control as in Step S405 in Fig. 4. In the exposure control in Step S501, an exposure is determined and an F-number and a shutter speed are determined on the basis of the determined exposure. The image pickup apparatus performs shooting with the determined F-number and shutter speed being set and performs the white balance control on the basis of the shot data in Step S502. In Step S503, an image is captured with the exposure being set, and the image processing unit 110 performs image processing including the white balance by using the white balance coefficients determined in the white balance control to display the result of the image processing in the EVF screen. In Step S504, the process acquires pixel data in the color capture frame 802 from the image displayed in the EVF screen in Step S503 (the image stored in the image display memory 113 or in the memory 114). In Steps S410 and S413 in Fig. 4, the process uses the pixel data acquired in Steps S501 to S504 to determine the source color and the destination color.

The second embodiment differs from the first embodiment in that the exposure control and the white balance control are performed both in the determination of the source color and in the determination of the destination color. Specifically, according to the first embodiment, when the left or right button of the cross button 209 is pressed, the image data displayed in the EVF screen is used to yield an average of the pixel values in the color capture frame 802 and to determine the source color or the destination color. In contrast, according to the second embodiment, when the left or right button of the cross button 209 is pressed, the exposure control and the white balance control is further performed, and the image that is captured and is subjected to the image processing in accordance with the settings set in the exposure control or white balance control is used to yield an average of the pixel values in the color capture frame 802.

As described above, according to the second embodiment, the image that is captured after an appropriate exposure is set is used in the determination of the source color and the destination color. Accordingly, it is possible to use the image that is captured with an appropriate brightness being set to determine the source color and the destination color. As a result, the user can capture an intended source color and destination color more accurately.

In addition, according to the second embodiment, in the determination of the source color or the destination color, the parameters in the white balance processor 301 are set to appropriate values before the image processed in the image pickup apparatus 100 is used. Accordingly, it is possible to capture an appropriate source color and destination color, and the user can capture the source color and the destination color more accurately. Consequently, the source color and the destination color can be captured with appropriate control values being set every time even when the source color and the destination color are captured at different times, at different sites, in different conditions, and for different objects.

Third Embodiment

A third embodiment will be described. As described above, the image pickup apparatus 100 has the two shooting modes: that is, the normal shooting mode and the color conversion mode in which the source color and the destination color can be set to change the color reproducibility. According to the third embodiment, the normal shooting mode differs from the color conversion mode in the execution intervals of the exposure control and of the white balance control. Specifically, the execution intervals of the exposure control and of the white balance control in the color conversion mode are made shorter than those in the normal shooting mode.

The process in the normal shooting mode is equivalent to the process in Fig. 4 from which the steps relating to the color conversion, that is, Steps S408 to S415, are deleted. Specifically, in the normal shooting mode, an exposure is first determined. After the exposure is determined, an F-number and a shutter speed are determined on the basis of the determined exposure and the determined F-number and shutter speed are used as the F-number and shutter speed of the image pickup apparatus. In the exposure control, the exposure of an image to be displayed in the EVF screen is controlled. Since frequently changing the exposure causes flicker in the display, a time constant is set. For example, the exposure control is set to be performed every two seconds (Steps S402 and S403). Next, the white balance control is performed on the basis of the data captured with the determined F-number and shutter speed being set. Since frequently changing the white balance causes flicker in the display, as in the exposure control, the white balance coefficients used in the white balance is calculated, for example, every five seconds to update the white balance coefficients used in the image processing (Steps S404 and S405). An image is captured and the image processing unit 110 performs the image processing to display the image in the EVF screen (Steps S406 and S407). If the user releases the shutter, the shooting is performed (in Steps S416 and S417). If the user does not release the shutter, the process goes back to S402.

In contrast, since it is necessary to capture the source color and the destination color more accurately in the color conversion mode, the time constant in the exposure control in Steps S402 and S403 in Fig. 4 is set to a value smaller than that in the normal shooting mode. For example, the time constant is set such that the exposure control is performed every second. Also in the white balance control in Steps S404 and S405 in Fig. 4, the time constant is set to a value smaller than that in the normal shooting mode such that the white balance control is performed, for example, every second. The white balance coefficients are calculated to update the white balance coefficients used in the image pickup apparatus to the calculated white balance coefficients. Although the above operation increases the flicker in the EVF display in the color conversion mode, it is possible to set a more accurate source color and destination color because the exposure and the white balance are always and rapidly restored to appropriate values before capturing the source color and the destination color and are kept in a desirable state.

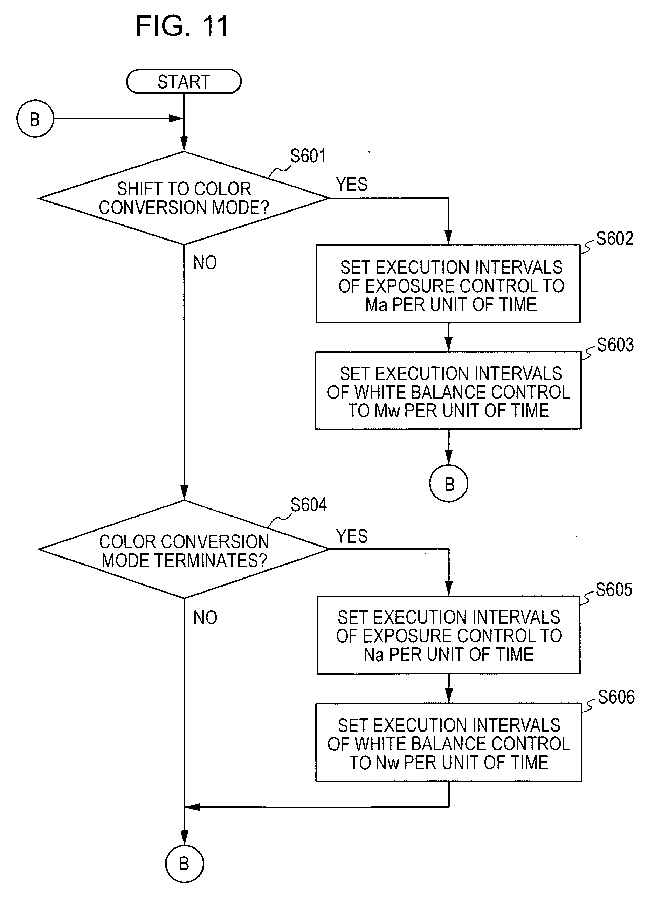

In order to realize the above operation, the system controller 109 performs a process shown in Fig. 11. In Step S601, the system controller 109 determines whether the color conversion mode is set. If the system controller 109 determines that the color conversion mode is set, then in Step S602, the system controller 109 sets the execution interval of the exposure control per unit of time to "Ma" (every second in the above example). In Step S603, the system controller 109 sets the execution interval of the white balance control per unit of time to "Mw" (every second in the above example). In Step S604, the system controller 109 determines whether the color conversion mode terminates. If the system controller 109 determines that the color conversion mode terminates, for example, if the color conversion mode goes back to the normal shooting mode, the system controller 109 proceeds from Step S604 to S605. In Step S605, the system controller 109 sets the execution interval of the exposure control per unit of time to "Na" (every two seconds in the above example). In Step S606, the system controller 109 sets the execution interval of the white balance control per unit of time to "Nw" (every six seconds in the above example).

As described above, when the number of times the exposure control is performed in the EVF display in the normal shooting mode is set to "Na" per unit of time and the number of times the exposure control is performed in the EVF display in the color conversion mode is set to "Ma" per unit of time, making "Na" smaller than "Ma" (Na < Ma) allows the image in the capturing the colors in the color conversion mode to be previewed at an more appropriate exposure. As a result, the user can easily and accurately capture the source color and the destination color. In other words, making the time required to perform the exposure control in the capture of the colors in the color conversion mode shorter than the time required to perform the exposure control in the normal shooting mode allows the image to be captured at an appropriate exposure corresponding to a change in the shooting site or time or in the environmental light.

When the number of times the white balance control is performed in the EVF display in the normal shooting mode is set to "Nw" per unit of time and the number of times the white balance control is performed in the EVF display in the color conversion mode is set to "Mw" per unit of time, making "Nw" smaller than "Mw" (Nw < Mw) allows the image in the capturing the colors in the color conversion mode to be previewed at an more appropriate white balance. As a result, the user can easily and accurately capture the source color and the destination color. In other words, making the time required to perform the white balance control in the capture of the colors in the color conversion mode shorter than the time required to perform the white balance control in the normal shooting mode allows the image to be captured at an appropriate white balance corresponding to a change in the environmental light or a rapid movement of the object.

Although the AE measurement for the exposure control in the capture of the image for determining the source color and the destination color in the color conversion mode is performed by evaluation measurement using the entire image, as in the normal shooting mode, in the second embodiment, there are cases in which it is not possible to capture the source color and the destination color with the brightness of the color capture frame being set to an appropriate value in the evaluation measurement considering the entire screen, if an area outside the color capture frame of the image is excessively dark or bright. In order to resolve such a problem, the measurement method may be changed to spot measurement to perform the exposure control such that the luminance in the color capture frame is set to an appropriate value, in the exposure control in Step S501 in Fig. 10. In the spot measurement, the luminance in the color capture frame can be appropriately controlled.

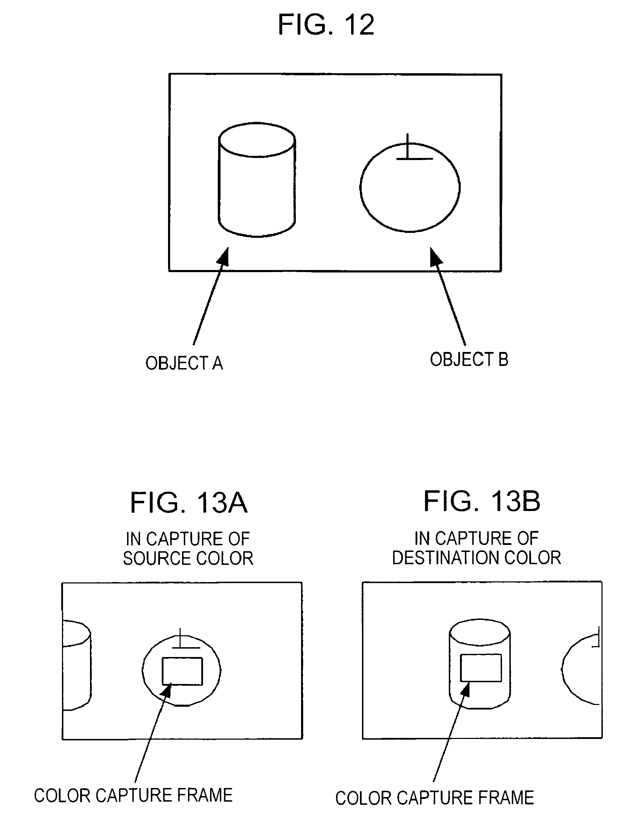

According to the second embodiment, the exposure may be fixed after the source color is captured before the subsequent destination color is captured in the capture of the source color and the destination color. For example, when the color of an object B is to be changed to the color of an object A in a scene shown in Fig. 12, different exposures are used because the field angle and the object in the capture of the source color in Fig. 13A differ from those in the capture of the destination color in Fig. 13B. With different exposures being used, it is not possible to accurately convert the source color into the destination color. In order to resolve such a problem, after the exposure control in the capture of the source color is performed (Step S501 in Fig. 10), the exposure control may not be performed until the subsequent destination color is captured, that is, the exposure may be locked (AE lock) upon completion of the capture of the source color. Similarly, changing the field angle and shooting different objects, as shown in Figs. 13A and 13B, changes the white balance. Accordingly, after the white balance control (Step S502 in Fig. 10) is performed in the capture of the source color, the white balance control may not be performed until the subsequent destination color is captured, that is, the white balance may be locked (WB lock) upon completion of the capture of the source color.

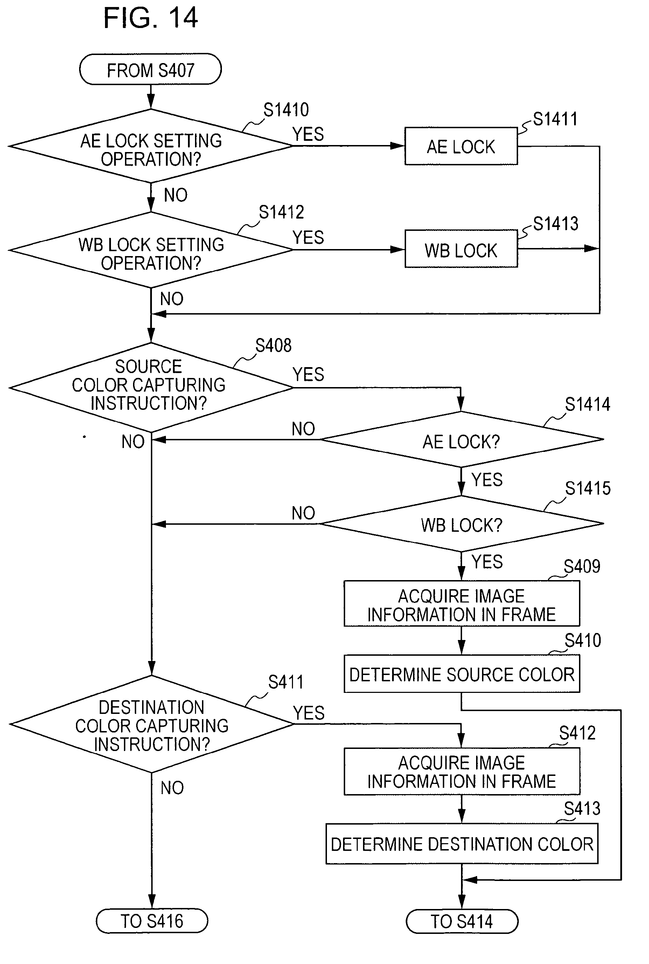

Fig. 14 is a flowchart showing the above process. Changing Steps S408 to S413 in Fig. 4 to the steps shown in Fig. 14 can realize the above process. Specifically, in Step S1410, the process determines whether an operation for locking the AE is detected. If the process determines that the operation for locking AE is detected, then in Step S1411, the process fixes the exposure in the current state. In Step S1412, the process determines whether an operation for locking the white balance is detected. If the process determines that the operation for locking the white balance is detected, then in Step S1413, the process locks the white balance in the current state. The AE lock and the WB lock may be set with any operation, for example, by using a combination of the MENU button 205 and the SET button 206.

After the instruction to capture the source color is issued, the process proceeds from Step S408 to Step S1414 to determine whether the AE lock is set. In Step S1415, the process determines whether the WB lock is set. If the process determines that the AE lock and the WB lock are set, the process proceeds to Step S409 to acquire image information in the color capture frame. Although the capture of the source color in Steps S409 and S410 is performed in this process only if both the AE lock and the WB lock are set, the process may proceed to Step S409 and the subsequent steps if either the AE lock or the WB lock is set. This allows the source color and the destination color to be captured in the same shooting conditions without being affected a minor change in, for example, the field angle in the capture of the source color and the destination color from similar objects or scenes.

The capture of the destination color in Step S411 is performed by a predetermined operation with the cross button, and the process proceeds from Step S411 to S412 only if the capture of the destination color (Steps S409 and S410) is completed. The AE lock and the WB lock may be released with the MENU button 205 or the SET button 206 or may be released after the destination color is captured (after Step S413).

Although the exposure control and the white balance control are performed as the optimization control in the capture of the colors in the second embodiment, the AF may be further performed as the optimization control in the capture of the colors. However, in the capture of the colors in the color conversion mode, the precision of the AF may be reduced in order to capture the colors at high speed. The reduction in the precision of the AF can be achieved by making a step width of a focus lens in the generation of an evaluation signal for determining a focus position larger than the step width in the normal shooting.

If the exposure and the white balance in the capture of the source color and the destination color greatly differ from those in the shooting, the shooting operation in Step S416 and the subsequent steps may be performed with the AE lock and the WB lock being set in the manner shown in Fig. 14 because it is likely that the source color is not accurately converted into the destination color as intended by the user.

In the WB lock, when a white-paper white balance that uses a white-balance control value calculated by capturing an image (a white-paper image) of an achromatic object, for example, of a white object in advance is set, the WB may be locked to the white-balance control value in the white-paper white balance to capture the source color and the destination color. Alternatively, in order to resolve the above problem, the exposure correction may be prohibited such that the exposure in the capture of the source color and the destination color does not differ from the exposure in the shooting.

As described above, according to the embodiments of the present invention, since the source color and the destination color can be actually captured with the digital camera to specify the source color and the destination color, it is possible to easily capture an image according to the user's preference.

Other Embodiments

The components in the image pickup apparatus according to any of the embodiments of the present invention and the steps in the image capturing method can be realized by executing a program stored in the RAM or the ROM in a computer. The present invention is applicable to the program and to a computer-recordable recording medium having the program recorded therein.

The present invention may be embodied by, for example, a system, an apparatus, a method, a program, or a storage medium. Specifically, the present invention may be applied to a system including multiple devices or to an apparatus including one device.

The present invention can be embodied by directly or remotely supplying a program (the program corresponding to the flowchart shown in Fig. 3) of software realizing the functions according to the above embodiments to a system or an apparatus, the computer in which system or apparatus reads out and executes the program.

Accordingly, the present invention is embodied by the program code itself installed in the computer in order to realize the functions of the embodiments of the present invention. That is, the present invention is applicable to the computer program for realizing the functions of the embodiment of the present invention.

In this case, the above program may be an object code, a program executed by an interpreter, or script data supplied to the operating system (OS) as long as it has the function of the program.

The recording medium supplying the program may be any recording medium, such as a floppy® disk, a hard disk, an optical disk, a magneto-optical disc (MO), a compact disc-read only memory (CD-ROM), a compact disc recordable (CD-R), a compact disc rewritable (CD-RW), a magnetic tape, a non-volatile memory card, a ROM, or a digital versatile disc (DVD) (a DVD-ROM or a DVD-R).

Alternatively, a browser of the client computer may be used to access a Web page on the Internet, and the computer program of the embodiment of the present invention or a compressed file having an automatic installation function may be downloaded from the Web page in a storage medium, such as the hard disk.

Furthermore, the program code in the program embodying the present invention may be divided into multiple files that are downloaded from different Web pages. In other words, the present invention is applicable to the WWW server from which multiple users download the program files for realizing the functions according to the embodiments of the present invention in the computer.

The program according to the embodiment of the present invention may be encrypted and the encrypted program may be stored in the storage medium, such as the CD-ROM, which is distributed to the users, the users satisfying predetermined conditions may be allowed to download key information used for decrypting the encrypted program from the Web page over the Internet, and the key information may be used to execute the encrypted program that is installed in the computer.

The computer that executes the readout program realizes the functions of the embodiments described above. In addition, the OS or the like running on the computer may execute all or part of the actual processing on the basis of instructions in the program to realize the functions of the embodiments described above.

After the program supplied in the manners described above has been written in a memory in the image pickup apparatus through the recording medium or with the image pickup apparatus being connected to the computer, all or part of the actual processing may be performed on the basis of instructions in the program to realize the functions of the embodiments described above.

Furthermore, after the program read from the storage medium is written to a memory provided in a function expansion board inserted into the computer or in a function expansion unit connected to the computer, a CPU or the like mounted on the function expansion board or function expansion unit performs all or part of the actual processing so that the functions of the foregoing embodiments can be implemented by this processing.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

**Claims**

1. An image pickup apparatus that has an imaging unit, an image processing unit for processing image data captured by the imaging unit, and a recording unit for recording the image data output from the image processing unit, the image pickup apparatus comprising:

   a display unit configured to display the image data that is captured by the imaging unit and is output from the image processing unit in an electronic viewfinder;
   a first determining unit configured to determine a first color value on the basis of color information included in a predetermined area in the image being displayed in the electronic viewfinder;
   a second determining unit configured to determine a second color value on the basis of the color information included in the predetermined area in the image being displayed in the electronic viewfinder at a timing different from the timing of the first determining unit; and
   a setting unit configured to set a parameter used in the image processing unit such that the first color value is converted into the second color value.

2. The image pickup apparatus according to Claim 1,
   wherein the display unit displays the predetermined area used in the first and second determining units in the electronic viewfinder as a frame.

3. The image pickup apparatus according to Claim 2, further comprising a frame setting unit with which a user sets the position and/or size of the frame corresponding to the predetermined area.

4. The image pickup apparatus according to Claim 1,
   wherein the display unit displays a first patch image having the first color value and a second patch image having the second color value at predetermined positions along with the electronic viewfinder.

5. The image pickup apparatus according to Claim 1,
   wherein the image processing unit includes a process of performing interpolation by using the color value of a grid point near the grid point having the input color value, among a plurality of grid points set in a color space, to convert the input color value into a color value to be output, and

wherein the setting unit changes the color value of a grid point near the grid point having the first color value, among the plurality of grid points set in the color space, such that the second color value is yielded from the interpolation by using the color value of the near grid point.

**6.** The image pickup apparatus according to Claim 5,
wherein the color space is a YUV space.

**7.** The image pickup apparatus according to Claim 1, further comprising an optimizing unit configured to perform optimization before the determination by the first determining unit and the determination by the second determining unit.

**8.** The image pickup apparatus according to Claim 1, further comprising:

an input unit with which a first instruction to start the determination of the first color value by the first determining unit and a second instruction to start the determination of the second color value by the second determining unit are input; and
a performing unit configured to perform exposure control for setting an appropriate exposure of the imaging unit when either the first instruction or the second instruction is input,

wherein the first determining unit determines the first color value on the basis of the image captured by the imaging unit after the exposure control by the performing unit, and the second determining unit determines the second color value on the basis of the image captured by the imaging unit after the exposure control by the performing unit.

**9.** The image pickup apparatus according to Claim 1, further comprising:

an input unit with which a first instruction to start the determination of the first color value by the first determining unit and a second instruction to start the determination of the second color value by the second determining unit are input; and
an optimizing unit configured to optimize a parameter for white balance control in the image processing unit when either the first instruction or the second instruction is input,

wherein the first determining unit determines the first color value on the basis of the image output from the imaging unit after the parameter for the white balance control is controlled by the performing unit, and the second determining unit determines the second color value on the basis of the image output from the image processing unit after the parameter for the white balance control is controlled by the performing unit.

**10.** The image pickup apparatus according to Claim 1,
wherein the execution interval of exposure control for setting an appropriate exposure in the imaging unit in an operation mode in which the first determining unit, the second determining unit, and the setting unit function is made shorter than the execution interval of the exposure control in a normal shooting mode.

**11.** The image pickup apparatus according to Claim 1,
wherein the execution interval of optimization of a parameter for white balance control in the image processing unit in an operation mode in which the first determining unit, the second determining unit, and the setting unit function is made shorter than the execution interval of the optimization of the parameter for the white balance control in the image processing unit in a normal shooting mode.

**12.** The image pickup apparatus according to Claim 1,
wherein automatic exposure measurement for exposure control in the image processing unit is performed by spot measurement in an operation mode in which the first determining unit, the second determining unit, and the setting unit function.

**13.** The image pickup apparatus according to Claim 1,
wherein the precision of automatic focusing control is reduced in an operation mode in which the first determining unit, the second determining unit, and the setting unit function.

**14.** The image pickup apparatus according to Claim 1,
wherein exposure control and/or white balance control in the image processing unit is prohibited after the first color value is determined by the first determining unit before the second color value is determined by the second determining unit, in an operation mode in which the first determining unit, the second determining unit, and the setting unit function.

**15.** The image pickup apparatus according to Claim 1,
wherein exposure control and/or white balance control in the image processing unit is prohibited before the first color value and the second color value are determined, in an operation mode in which the first determining unit, the second determining unit, and the setting unit function.

**16.** A control method in an image pickup apparatus having an imaging unit, an image processing unit for processing image data captured by the imaging unit, and a recording unit for recording the image data output from the image processing unit, the control method comprising steps of:

displaying the image data that is captured by the imaging unit and is output from the image processing unit in an electronic viewfinder in a display unit;
determining a first color value on the basis of color information included in a predetermined area in the image being displayed in the electronic viewfinder;
determining a second color value on the basis of the color information included in the predetermined area in the image being displayed in the electronic viewfinder at a timing different from the timing of the first determining unit; and
setting a parameter used in the image processing unit such that the first color value is converted into the second color value.

**17.** A program causing a computer to perform the control method according to Claim 16.

**18.** A recording medium storing the computer readable program according to Claim 17.

# FIG. 1

## FIG. 1A

| FIG. 1A | FIG. 1B |
|---------|---------|

TIMING GENERATOR 106

D/A CONVERTER 107

151  101  102

IMAGING DEVICE 103

A/D CONVERTER 105

MEMORY CONTROLLER 108

IMAGE PROCESSING UNIT 110

TO FIG. 1B

EXPOSURE CONTROLLER 111

112

109

DISTANCE MEASUREMENT CONTROLLER 112

118

ZOOM CONTROLLER

SYSTEM CONTROLLER

119

BARRIER CONTROLLER

117

FLASH

131

POWER SUPPLY CONTROLLER

132

133

134

POWER SUPPLY UNIT

MEMORY 120

DISPLAY UNIT 121

NON-VOLATILE MEMORY 124

# FIG. 1B

# FIG. 2

# FIG. 3

# FIG. 4

COLOR-CONVERSION MODE

SET PARAMETER — S401

(A)

EXPOSURE CONTROL START TIMING? — S402
YES → EXPOSURE CONTROL — S403
NO

WHITE-BALANCE CONTROL START TIMING? — S404
YES → WHITE BALANCE CONTROL — S405
NO

IMAGE CAPTURE AND IMAGE PROCESSING — S406

EVF DISPLAY — S407

SOURCE COLOR CAPTURING INSTRUCTION? — S408
YES → ACQUIRE IMAGE INFORMATION IN FRAME — S409
SET SOURCE COLOR — S410
NO

DESTINATION COLOR CAPTURING INSTRUCTION? — S411
YES → ACQUIRE IMAGE INFORMATION IN FRAME — S412
SET DESTINATION COLOR — S413
NO

SHUTTER BUTTON IS PRESSED? — S416
NO
YES → SHOOTING OPERATION — S417

DETERMINE CONVERSION PARAMETER FROM SOURCE COLOR TO DESTINATION COLOR — S414

SET PARAMETER — S415

(A)

## FIG. 5

| R | G1 | R | G1 | R | G1 |
|---|----|---|----|---|----|
| G2 | B | G2 | B | G2 | B |
| R | G1 | R | G1 | R | G1 |
| G2 | B | G2 | B | G2 | B |
| R | G1 | R | G1 | R | G1 |
| G2 | B | G2 | B | G2 | B |

BAYER ARRAY CCD SIGNAL

## FIG. 6

| R | R | R | R | R | R |
|---|---|---|---|---|---|
| R | R | R | R | R | R |
| R | R | R | R | R | R |
| R | R | R | R | R | R |
| R | R | R | R | R | R |
| R | R | R | R | R | R |

| G1 | G1 | G1 | G1 | G1 | G1 |
|----|----|----|----|----|----|
| G1 | G1 | G1 | G1 | G1 | G1 |
| G1 | G1 | G1 | G1 | G1 | G1 |
| G1 | G1 | G1 | G1 | G1 | G1 |
| G1 | G1 | G1 | G1 | G1 | G1 |
| G1 | G1 | G1 | G1 | G1 | G1 |

| G2 | G2 | G2 | G2 | G2 | G2 |
|----|----|----|----|----|----|
| G2 | G2 | G2 | G2 | G2 | G2 |
| G2 | G2 | G2 | G2 | G2 | G2 |
| G2 | G2 | G2 | G2 | G2 | G2 |
| G2 | G2 | G2 | G2 | G2 | G2 |
| G2 | G2 | G2 | G2 | G2 | G2 |

| B | B | B | B | B | B |
|---|---|---|---|---|---|
| B | B | B | B | B | B |
| B | B | B | B | B | B |
| B | B | B | B | B | B |
| B | B | B | B | B | B |
| B | B | B | B | B | B |

BAYER INTERPOLATION SIGNAL

# FIG. 7

| | | |
|---|---|---|
| 1/16 | 2/16 | 1/16 |
| 2/16 | 4/16 | 2/16 |
| 1/16 | 2/16 | 1/16 |

# FIG. 8

802

801

Src
803

Dst
804

FIG. 9

# FIG. 10

```
  ┌──────────────────────────┐          S409,S412
  │   ACQUIREMENT OF IMAGE    │
  │   INFORMATION IN FRAME    │
  └──────────────────────────┘
               │
               ▼
  ┌──────────────────────────┐          S501
  │     EXPOSURE CONTROL      │
  └──────────────────────────┘
               │
               ▼
  ┌──────────────────────────┐          S502
  │   WHITE BALANCE CONTROL   │
  └──────────────────────────┘
               │
               ▼
  ┌──────────────────────────┐          503
  │      IMAGE CAPTURE,       │
  │     IMAGE PROCESSING,     │
  │     AND EVF DISPLAY       │
  └──────────────────────────┘
               │
               ▼
  ┌──────────────────────────┐          S504
  │      ACQUIRE IMAGE        │
  │    INFORMATION IN FRAME   │
  └──────────────────────────┘
               │
               ▼
          ┌──────────┐
          │   END    │
          └──────────┘
```

# FIG. 11

```
                    ( START )
   (B) ──────────────→ │
                        │
                        ▼                    S601
                    ╱─────────────╲         YES
                   ╱ SHIFT TO COLOR ╲──────────────┐
                   ╲ CONVERSION MODE?╱              │
                    ╲───────────────╱               │
                        │                           ▼                         S602
                        │ NO              ┌───────────────────────┐
                        │                 │ SET EXECUTION INTERVALS │
                        │                 │ OF EXPOSURE CONTROL TO  │
                        │                 │ Ma PER UNIT OF TIME     │
                        │                 └───────────────────────┘
                        │                           │
                        │                           ▼                         S603
                        │                 ┌───────────────────────┐
                        │                 │ SET EXECUTION INTERVALS │
                        │                 │ OF WHITE BALANCE CONTROL│
                        │                 │ TO Mw PER UNIT OF TIME  │
                        │                 └───────────────────────┘
                        │                           │
                        │                           ▼
                        │                          (B)
                        ▼                 S604
                    ╱─────────────╲        YES
                   ╱ COLOR CONVERSION╲──────────────┐
                   ╲ MODE TERMINATES?╱              │
                    ╲───────────────╱               │
                        │                           ▼                         S605
                        │ NO              ┌───────────────────────┐
                        │                 │ SET EXECUTION INTERVALS │
                        │                 │ OF EXPOSURE CONTROL TO  │
                        │                 │ Na PER UNIT OF TIME     │
                        │                 └───────────────────────┘
                        │                           │
                        │                           ▼                         S606
                        │                 ┌───────────────────────┐
                        │                 │ SET EXECUTION INTERVALS │
                        │                 │ OF WHITE BALANCE CONTROL│
                        │                 │ TO Nw PER UNIT OF TIME  │
                        │                 └───────────────────────┘
                        │                           │
                        │◄──────────────────────────┘
                        ▼
                       (B)
```

# FIG. 12

OBJECT A                    OBJECT B

# FIG. 13A

IN CAPTURE OF
SOURCE COLOR

COLOR CAPTURE FRAME

# FIG. 13B

IN CAPTURE OF
DESTINATION COLOR

COLOR CAPTURE FRAME

# FIG. 14

```
                    ┌──────────────┐
                    │  FROM S407   │
                    └──────────────┘
                           │
                           ▼
                        S1410
              ╱────────────────────╲      YES        ┌─────────────┐  S1411
             ╱   AE LOCK SETTING     ╲──────────────▶│   AE LOCK   │
             ╲     OPERATION?        ╱                └─────────────┘
              ╲────────────────────╱                        │
                           │ NO
                           ▼
                        S1412
              ╱────────────────────╲      YES        ┌─────────────┐  S1413
             ╱   WB LOCK SETTING     ╲──────────────▶│   WB LOCK   │───▶
             ╲     OPERATION?        ╱                └─────────────┘
              ╲────────────────────╱
                           │ NO
                           ▼
                        S408
              ╱────────────────────╲      YES
             ╱      SOURCE           ╲──────────────┐
             ╲  COLOR CAPTURING      ╱              ▼
             ╲   INSTRUCTION?       ╱             S1414
              ╲────────────────────╱    NO   ╱──────────────╲
                           │ NO   ◀──────────╲   AE LOCK?    ╱
                           │                  ╲──────────────╱
                           │                       │ YES
                           │                       ▼   S1415
                           │              NO   ╱──────────────╲
                           │         ◀─────────╲   WB LOCK?    ╱
                           │                    ╲──────────────╱
                           │                         │ YES
                           │                         ▼        S409
                           │              ┌──────────────────────┐
                           │              │   ACQUIRE IMAGE       │
                           │              │  INFORMATION IN FRAME │
                           │              └──────────────────────┘
                           │                         │        S410
                           │              ┌──────────────────────┐
                           │              │ DETERMINE SOURCE COLOR│
                           │              └──────────────────────┘
                           ▼        S411                 │
              ╱────────────────────╲      YES            │
             ╱    DESTINATION        ╲──────────────┐    │
             ╲  COLOR CAPTURING      ╱              ▼    │
             ╲   INSTRUCTION?       ╱             S412    │
              ╲────────────────────╱   ┌──────────────────────┐
                           │ NO        │   ACQUIRE IMAGE       │
                           │           │  INFORMATION IN FRAME │
                           │           └──────────────────────┘
                           │                      │        S413
                           │           ┌──────────────────────────┐
                           │           │ DETERMINE DESTINATION COLOR│
                           │           └──────────────────────────┘
                           ▼                      ▼
                    ┌──────────────┐       ┌──────────────┐
                    │  TO S416     │       │  TO S414     │
                    └──────────────┘       └──────────────┘
```

31